Europäisches Patentamt

European Patent Office

Office européen des brevets

(11) Publication number: **0 345 538**

**A2**

# EUROPEAN PATENT APPLICATION

(21) Application number: **89109362.7**

(22) Date of filing: **24.05.89**

(51) Int. Cl.⁴: **B60M 1/28**

(30) Priority: **09.06.88 IT 2139588 U**

(43) Date of publication of application:
**13.12.89 Bulletin 89/50**

(84) Designated Contracting States:
**BE DE ES FR GB SE**

(71) Applicant: **COSTAMASNAGA S.p.A.**
**Via 4 Novembre**
**I-22041 Costamasnaga (Como)(IT)**

(72) Inventor: **Maluta, Sandro**
**Via Enrico Torti 22**
**I-20052 Monza (Milan)(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Vehicle for road and rail use, with a mobile platform.**

(57) A vehicle for road and rail use provided with a platform (7) mobile perpendicularly to a floor (6) of said vehicle (1), characterised in that the platform (7) supports at least one table (22) indipendently mobile vertically and/or laterally to the platform (7) itself, said mobile table (22) being rigid with the platform (7) during its movement, actuator means (24) being provided to allow further movement after stoppage of the platform.

Fig. 1

## VEHICLE FOR ROAD AND RAIL USE, WITH A MOBILE PLATFORM

This invention relates to a vehicle able to move on the road and on railway tracks and provided with a platform mobile perpendicularly to the vehicle floor.

The vehicle can be used for example for repairing overhead electrical lines located in proximity to and above railway tracks. Such lines are generally carried on uprights disposed along the track.

More specifically, said uprights generally carry an arm extending above the rails and carrying the overhead line for feeding current for example to the locomotives of railway trains. A second electrical line is generally carried at the tops of said uprights for powering the various services along the railway.

Thus if repairs are to be carried out on said overhead lines, a vehicle with a mobile platform is driven up to the faulty line and an operator is raised by means of a platform to a suitable height to carry out the work.

As the platform is heavy, when the platform is raised to its maximum height to enable the operator to repair the highest lines dangerous instability can arise in the vehicle-platform system and is heightened by the movement of the operator on the platform.

An object of the present invention is therefore to provide a vehicle of the aforesaid type which enables repair personnel for overhead lines to reach and operate on the highest overhead line without excessive elevation of the platform being required, so solving the stability problems relating to such vehicles of the state of the art.

This and further objects which will be more apparent to the expert of the art are attained by a vehicle for road and rail use provided with a platform mobile perpendicularly to a floor of said vehicle, characterised in that the platform supports at least one table independently mobile vertically and/or laterally to the platform itself, said mobile table being rigid with the platform during its movement, actuator means being provided to allow further movement after stoppage of the platform.

The present invention will be more apparent from the accompanying drawing which is given by way of non-limiting example and in which:

Figure 1 is a side view of a vehicle with mobile platform constructed in accordance with the present invention;

Figure 2 is a partly sectional front diagrammatic view of a vehicle in accordance with Figure 1 with some parts omitted for greater clarity and in which those parts shown in dashed lines indicate a stage in the use of the mobile platform;

Figure 3 is a partly sectional side view of a platform for the vehicle in accordance with Figure 1 in a different stage of use from that of Figure 2;

Figure 4 is a plan view of a modification of the platform of the vehicle of Figure 1.

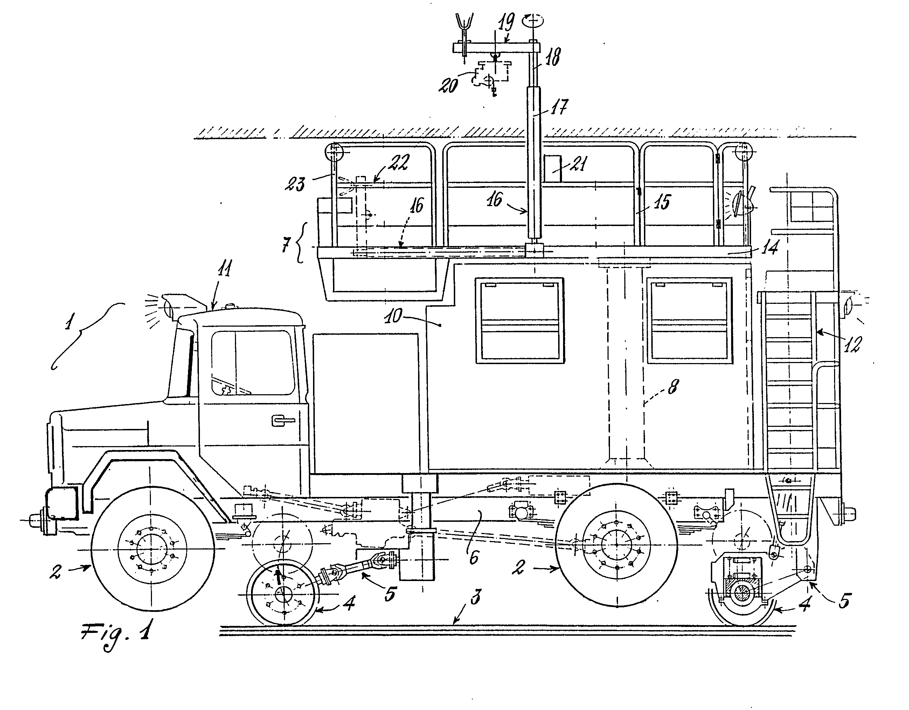

With reference to said figures and in particular to Figure 1, the vehicle according to the present invention is indicated overall by 1. This vehicle can move either on a normal road, using normal tyred wheels 2, or on a track 3 using rail-type wheels 4. The vehicle 1 comprises known means 5 which shift the rail-type wheels 4 from a position withdrawn towards a floor 6 (position shown by dashed lines in Figure 1) to a position in which they are lowered onto the track 3 with consequent raising of said floor 6 and of the tyred wheels 2 from the track.

The vehicle 1 supports in known manner a platform 7 mobile perpendicularly to said floor by a known hydraulic system which drives a telescopic connection 8 carrying said platform 7. The telescopic connection or hydraulic piston 8 rests on the floor 6. The platform 7 is shown in Figure 1 in its completely lowered position, above a normal vehicle body 10 located to the rear of the cab 11 of the vehicle 1. Normal ladders 12 are also provided to allow the repair personnel for the overhead electrical lines 13 (visible in Figures 2 and 3) to climb onto the platform 1.

The platform 7 comprises a base 14 fixed on its underside to the hydraulic piston 8 and carrying lateral raised protection sides 15. To the base 14 there is connected a foldable telescopic arm 16 comprising a sleeve 17 in which there slides a rod 18 which can rotate in said sleeve and carries at one end an arm 19. Said arm 19 supports a winch 20. Said telescopic arm 16 is shown (in Figure 1) in full lines in its raised working position, and is shown in dashed lines in its folded position at the side of the platform 7.

Said platform also comprises an element 21 for operating the telescopic arm 16 and, laterally, at least one table 22 mobile vertically and/or laterally to be base 14 of the platform 7. The mobile table 22 also has protection sides 23 and is raised by pneumatic members or a scissor-type lifting device 24 shown in Figure 2 by dashed lines.

The platform can rotate about the hydraulic piston 8 and supports the mobile table 22 during any of its movements .

Figures 2 and 3 show diagrammatically a vehicle 1 supporting the platform 7 in a raised position such as to enable an operator to repair any faults in the overhead electrical lines 13 on a railroad. In Figures 2 and 3 those parts identical to the parts shown in Figure 1 carry the same reference numerals.

As can be seen from said figures, the overhead electrical lines 13 are carried in known manner by uprights 30 disposed along the track 3 and supporting an arm 31 positioned (in Figures 2 and 3) transversely to said track. Specifically, the arm 31 carries a line 32 for powering for example the drive wheels of railway trains, whereas the line 33, which for example feeds current to the various devices present along the rail rack such as the usual signals (not shown) is located in proximity to the upper end 35 of the upright 30.

Figure 4 shows a different embodiment of the platform 7 carrying in this case two independently mobile table 22A and 22B.

It will now be assumed that a fault in the railway overhead electrical lines 13 is to be repaired.

To do this the vehicle 1 is driven up to the point in which the fault has occurred. The hydraulic piston 8 is then used to raise the platform 7, onto which the operator has previously climbed, to the minimum essential height for carrying out the work on the overhead line 32 which feeds current to the train locomotives.

If the fault has occurred in the line 33 at the top 35 of the upright 30, the operator then climbs onto the mobile table 22 and using known operating devices he operates the scissor device 24 to raise said mobile table to a height such as to allow him to repair the line 33.

It should be noted that the device 24 for moving the mobile table 22 can be operated by either its own hydraulic system or circuit, or by the hydraulic circuit which operates the platform 7.

Finally, if the fault cannot be reached merely by raising the mobile table 22, the repair operator can rotate the platform 7 about the hydraulic piston 8 and then raise the mobile table 22 to the height required to carry out the necessary operation.

The present description has related to one example of the use of the vehicle according to the invention on a railroad. However said vehicle can be used in the same manner on a road.

A vehicle constructed in accordance with the present invention and in particular provided with a substantially double mobile platform enables the highest parts of overhead electrical lines present for example over railway tracks to be reached in a simple manner, avoiding the danger of unbalance due in state-of-the-art vehicles to the too elevated heights reached by the platforms under analogous conditions.

## Claims

1. A vehicle for road and rail use provided with a platform (7) mobile perpendicularly to a floor (6) of said vehicle (1), characterised in that the platform (7) supports at least one table (22) independently mobile vertically and/or laterally to the platform (7) itself, said mobile table (22) being rigid with the platform (7) during its movement, actuator means (24) being provided to allow further movement after stoppage of the platform.

2. A vehicle as claimed in claim 1, characterised in that the actuator means (22) for moving the mobile table (22) are operated hydraulically.

3. A vehicle as claimed in claim 1, characterised in that the actuator means are a scissor-type device (24).

4. A vehicle as claimed in claim 1, characterised in that the mobile table (22) comprises protection sides (23).

5. A vehicle as claimed in claim 1, characterised in that the platform (7) is moved perpendicularly to the floor (6) of the vehicle (1) by a device comprising a hydraulic telescopic connection (8).

6. A vehicle as claimed in claims 1 to 5, characterised in that the platform is able to rotate about the hydraulic telescopic connection (8).

7. A vehicle as claimed in claims 1, 5 and 6, characterised in that the platform (7) comprises a base (14) carrying a telescopic arm (16) foldable onto said base, said telescopic arm (16) comprising a sleeve (17) in which there slides a rod (18), said rod being rotatable within said sleeve (17).

8. A vehicle as claimed in claim 7, characterised in that the rod (18) of the telescopic arm (16) supports an arm (19) to which a winch (20) is connected.

Fig. 1